# NEUE EUROPÄISCHE PATENTSCHRIFT

(11) **EP 0 348 696 B2**
(45) Veröffentlichungstag und Bekanntmachung des Hinweises auf die Entscheidung über den Einspruch: **30.08.1995**
(45) Hinweis auf die Patenterteilung: 26.08.1992
(21) Anmeldenummer: 89110181.8
(22) Anmeldetag: 06.06.1989
(51) Int. Cl.: A23G 3/02, A23G 3/04

(54) **Verfahren zur kontinuierlichen Herstellung von Hartbonbonmassen**
Process for continuously making hard sweets masses
Procédé de fabrication en continu de masses de bonbon dur

(30) Priorität: 25.06.1988 DE 3821505
(43) Veröffentlichungstag der Anmeldung: 03.01.1990
(73) Patentinhaber: Klöckner Hänsel GmbH, 30024 Hannover (DE)
(72) Erfinder: Mergelsberg, Reinhard, D-3008 Garbsen 8 (DE); De Vilchez-Kehr, Joè, D-3000 Hannover 1 (DE); Schlüter, Jürgen, D-3255 Lauenau (DE); Markwardt, Klaus, D-3014 Laatzen (DE)
(74) Vertreter: Rehberg, Elmar, Dipl.-Ing.

(56) Entgegenhaltungen:
- EP-A- 0 054 960
- EP-A- 0 094 292
- DE-B- 1 270 939
- DE-B- 1 283 662
- DE-B- 3 336 187
- DE-C- 936 842
- GB-A- 1 058 621
- Süsswaren 6/88, Seiten 232-237, "Zuckeraustauschstoffe"
- ZSW, 1983, Seiten 331-333, "Chronologie der saccharosefreien Süsswaren"
- Ter Braak Zeichnung Nr. W 85-889 und Auftragsschreiben
- Ter Braak Zeichnung Nr. 5661-5664-SCHOO1 sowie Teileliste
- Werbeschrift der Palatinit Süssungsmittel GmbH, Isomalt, 1990

## Beschreibung

Die Erfindung bezieht sich auf ein Verfahren zur kontinuierlichen Herstellung von Hartbonbonmassen aus einer wässrigen Lösung von Einsatzstoffen, mit dem im Oberbegriff des Anspruchs 1 genannten Merkmalen Ein solches Verfahren ist aus der Zeitschrift "Süsswaren" 6/88, Seiten 232 bis 237 bekannt. Die eingesetzten Zuckeraustauschstoffe werden bei athmosphärichem Druck gekocht. Es muß eine höhere Siedetempratur im Vergleich zu Zucker eingehalten werden, um vergleichsbare Restwassergehalte zu erreichen. Nach dem Ausdampfen unter athmoshärischem Druck wird die Masse unter Unterdruck gesetzt und mit einem besonders gestalteten Walzenabzug aus dem Vakuumraum herausgeführt. Zur Erreichung einer für die Weiteverarbeitung hinreichend hoher Viskosität muß die maximale Leistung der Anlage um ca. 50% reduziert werden und der Vakuumraum darf nur zu etwa einem Drittel befüllt werden.

Aus der DE-PS 33 36 187 ist ein Verfahren und eine Vorrichtung bekannt, bei dem als Einsatzstoffe Saccharose und Glucosesirup in wässriger Lösung eingesetzt werden. Es handelt sich also hier um die Herstellung normaler Zuckerbonbons, also Bonbons, die aus bzw. unter Verwendung von Zucker hergestellt werden. Nach dem Mischen und Lösen der Einsatzstoffe in der wässrigen Lösung wird diese in einer oder auch in zwei Stufen gekocht, wobei Schlangenkocher zur Anwendung gelangen. Die Lösung wird dabei durch die Schlange gepumpt und mit Dampf beheizt. Durch die Kondensation des Dampfs an der Rohrleitung der Schlange wird die Lösung erwärmt. Diese heiße Lösung, deren Temperatur bis ca. 140°C betragen kann, gelangt aus dem Schlangenkocher in einen sich anschließenden Ausdampfraum, wobei der sich bildende Brüden in die Atmosphäre abgeführt wird. Es kann dabei eine Trockensubstanz von ca. 97% erreicht werden. Aus dem Ausdampfraum gelangt die Lösung bzw. Masse in einen Vakuumraum, so daß sie hier unter Unterdruck gesetzt wird.

Durch die Druckerniedrigung beginnt der Siedevorgang erneut. Der sich dabei bildende Brüden wird durch eine Vakuumpumpe abgesaugt, die zugleich für die Bereitstellung des Unterdrucks dient. Die Masse kühlt somit weiter ab und wird noch trockener und zäher. Es können hier Restwassergehalte von etwa 1,5 % erreicht werden. Unterhalb des Vakuumraums ist eine Förderschnecke angeordnet, die die Masse in einen Mischer überführt, in welchem Aromen, Farben u. dgl. sowie ggf. auch Luft der Masse hinzugefügt werden können. Bereits in der Austragseinrichtung muß die Masse eine ausreichende Zähigkeit aufweisen, damit die für die Aufrechterhaltung des Vakuums erforderliche Dichtheit an dieser Stelle erreicht wird. Anschließend wird die Masse in üblicher Weise gekühlt, geformt und weiter verarbeitet. Für die Verarbeitung normaler Zuckermassen bestehen bei den bekannten Anlagen keine Probleme.

Bei der kontinuierlichen Herstellung von zuckerfreien Hartbonbonmassen, also unter Verwendung von Zuckeraustauschstoffen wie z. B. Xylit, Sorbit, Palatinit usw. führt jedoch das bekannte Herstellverfahren nicht zu befriedigenden Ergebnissen. Die Ursache für diese negativen Ergebnisse liegt in den unterschiedlichen Viskositätswerten zwischen zuckerfreien und saccharose-glucosesiruphaltigen Bonbonmassen. Bei gleichen Temperaturen und gleichen Trockensubstanzgehalten liegen die Viskositätswerte der zuckerfreien Massen wesentlich unterhalb derjenigen der Saccharose-Glucosesirup-Massen, d. h. die Masse ist wesentlich dünnflüssiger und es gelingt damit nicht, in der Austragseinrichtung unter dem Vakuumraum die erforderliche Dichtheit für die Aufbringung des Unterdrucks bereitzustellen. Die Verarbeitung von Zuckerersatzstoffen als Einsatzstoffe bei der Herstellung von Hartbonbonmassen in der Art der Behandlung üblicher Saccharose-Glucosesirup-Massen führt dazu, daß der Verfahrensstufe des Kochens nicht die in der Zuckerbonbonherstellung folgende Verfahrensstufe des Vakuumierens nachgeschaltet werden kann, da die kontinuierliche Austragseinrichtung nur dann den zur Vakuumkonstanthaltung erforderlichen Druck aufbringen kann, wenn die auszutragende Masse eine systembedingte Mindestviskosität aufweist.

Um den beschriebenen Schwierigkeiten bei der Herstellung von Hartbonbonmasse unter Verwendung von Zuckeraustauschstoffen als Einsatzstoffe zu begegnen, könnte man zunächst daran denken, die Lösung unter einer erhöhten Temperatur, etwa im Bereich bis zu 165°C, zu kochen, um auf niedrigere Restwassergehalte zu kommen. Wird beispielsweise ein Restwassergehalt von 1,5 % bei z. B. ca. 165° erreicht, dann erbringt der Verfahrensschritt des Vakuumierens aufgrund der nur noch geringen verdampfbaren Restwassermengen keine relevante Produktveränderung mehr (Nachkühlung durch Nachverdampfung). Das Kochen der Lösung unter erhöhter Temperatur von ca. 165° erbringt jedoch auch wesentliche Nachteile. Zunächst einmal muß die Dampfversorgung entsprechend ausgelegt sein, wenn die Vorrichtung nicht mit einem reduzierten Durchsatz betrieben werden soll. Die in die Masse einzuarbeitenden Aromen sind in der Regel temperaturempfindlich, so daß sie nicht mehr zum Einsatz gelangen können. Es müssen Aromen verwendet werden, die diese vergleichsweise höheren Temperaturen vertragen. Trotz alledem entsteht eine Masse, die zu dünnflüssig ist, deren Viskosität also zu niedrig ist, um den besonderen Bedingungen der Weiterverarbeitung zu genügen.

Der Erfindung liegt die Aufgabe zugrunde, ein Verfahren aufzuzeigen, mit dem es möglich ist, Hartbonbonmassen unter Verwendung von Zuckeraustauschstoffen als Einsatzstoffe herzustellen, wobei das technologische Verhalten der Masse ähnlich dem bei Verwendung zuckerhaltiger Einsatzstoffe ist. Insbesondere soll die so hergestellte Hartbonbonmasse eine ausreichend hohe Viskosität für die anschließende Kühlung und Temperierung aufweisen.

Erfindungsgemäß wird dies nach dem Verfahren des Anspruchs 1 erreicht. Die Erfindung beschreitet damit nicht den sich anbietenden Weg, unter erhöhter Temperatur zu kochen, sondern schlägt gleichsam die gegenteilige Entwicklungsrichtung ein. Bereits während des Kochvorgangs bildet sich der Unterdruck zumindest bis in einen Teil der Schlange des Schlangenkochers aus, so daß der Siedevorgang bei vergleichsweise niedrigerer Temperatur intensiviert wird. Die in der Lösung auftretenden Temperaturen verlassen damit nicht den Bereich, wie er üblicherweise bei zuckerhaltigen Massen auftritt. Auch während des Ausdampfens wirkt Unterdruck auf die Masse ein, so daß bei gewollt niedrigerer Temperatur hohe Trockensubstanzgehalte entstehen. Die Anwendung der vergleichsweise niedrigen Kochtemperatur zieht es nach sich, daß keine wesentliche Durchsatzreduzierung auch bei begrenzter Dampfversorgung auftritt. Vorteilhaft lassen sich auch die bisher üblichen Aromen infolge der niedrigen Temperatur der Masse zumischen. Die Masse erreicht eine hohe Viskosität, ist also ausreichend zähflüssig, damit der Unterdruck für die Vakuumierung überhaupt aufgebaut und aufrechterhalten werden kann. Andererseits wird es dadurch möglich, auf vorhandene Austragseinrichtungen zurückgreifen zu können, die hier unverändert zum Einsatz gelangen können. Ein weiterer Vorteil ist es, daß das Verfahren mit äußerst geringer Modifikation gegenüber der Verarbeitung zuckerhaltiger Massen durchgeführt werden kann. Die technologischen Betriebswerte bewegen sich in ähnlichem Rahmen, was fabrikatorisch von Vorteil ist. Das Verfahren läßt es zu, Anlagen bzw. Vorrichtung herzustellen, die wahlweise für die Herstellung von Hartbonbonmassen aus zuckerfreien wie auch aus zuckerhaltigen Einsatzstoffen benutzt werden können. Es entsteht ein minimaler Aufwand. Auch bei reduzierter Dampfversorgung ist weiterhin ein hoher Durchsatz möglich.

Die wässrige Lösung kann bei einer Temperatur von unter 140°C und unter Einwirkung eines Unterdrucks von bis zu 0,05 bar absolut weiter ausgedampft werden, wobei eine Trockensubstanz von mindestens 98,5 % erreicht wird. Die angegebenen Werte beziehen sich auf Zustände im Vakuumraum. Sie können schwanken und sind abhängig von dem jeweils eingesetzten Zuckeraustauschstoff.

Die Erfindung wird anhand eines bevorzugten Ausführungsbeispiels weiter verdeutlicht und beschrieben.

Es zeigen:
Figur 1 eine schematische Darstellung der Vorrichtung zur Durchführung des Verfahrens und
Figur 2 ein Siedeliniendiagramm über der Trockensubstanz.

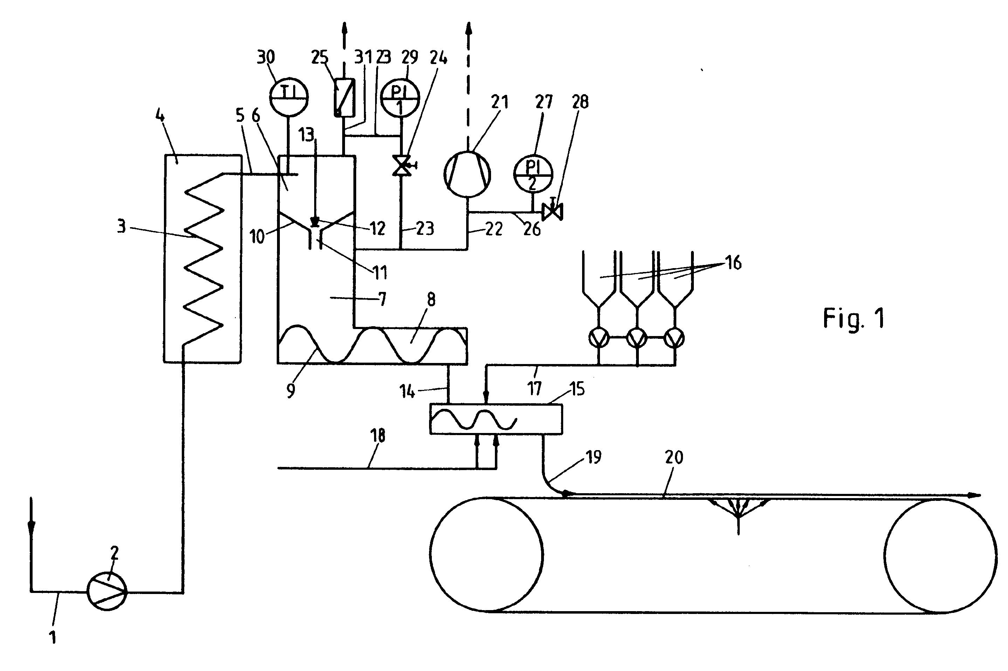

In Figur 1 sind nur die für das Verständnis der vorliegenden Erfindung wesentlichen Teile verdeutlicht. Es versteht sich, daß die Einsatzstoffe entsprechend der jeweiligen Rezeptur abgewogen und in eine wässrige Lösung überführt werden, die in einem ersten, nicht dargestellten Schlangenkocher, also gleichsam in einer ersten Stufe, gekocht werden kann. In dieser ersten Stufe werden die Einsatzstoffe kristallfrei gelöst und es wird ein bestimmter Ausgangszustand erreicht, der beispielsweise bei einem Wassergehalt von 20 % liegen kann. Über eine Rohrleitung 1 wird die Lösung vermittels einer Dosierpumpe 2 in die Schlange 3 eines Schlangenkochers 4 überführt. Der Schlangenkocher 4 ist dampfbeheizt Die Wärme wird durch Kondensation des Dampfs an der Schlange 3 auf die Lösung übertragen. Dem Schlangenkocher 4 ist über eine Verbindungsleitung 5 ein Ausdampfraum 6 nachgeschaltet, in weichem die Lösung bzw. die Masse ausdampfen kann, d. h. das in der Schlange 3 verdampfte Wasser wird in Dampfform als Brüden hier anfallen. Dem Ausdampfraum 6 ist ein Vakuumraum 7 nachgeschaltet, der zum Eingang einer Austragseinrichtung 8 führt, in welcher als wesentliches Element eine angetriebene spezielle Förderschnecke 9 untergebracht ist. Zwischen dem Ausdampfraum 6 und dem Vakuumraum 7 ist eine trichterförmige Trennwand 10 mit einer Durchlaßöffnung 11 angeordnet, der ein Ventilkörper 12 eines Einstellventils 13 zugeordnet ist, um den Querschnitt entsprechend dem gewünschten Durchflußwiderstand einstellen zu können. Von dem Ende der Austragsvorrichtung 8 führt eine Leitung 14 zu einem Mischer 15. Aus Behältern 16 für Farben, Aromen, Säure u. dgl. können Zuschlagsstoffe über eine Leitung 17 dem Mischer 15 und damit der in ihm bewegten Masse zugegeben werden. Über eine Leitung 18 kann Luft hinzugefügt werden. Am Ende des Mischers 15 wird die formbare heiße Masse gemäß Pfeil 19 auf ein Förderband 20 übergeben, auf welchem die Kühlung und Temperierung der Masse erfolgt. Hieran schließen sich übliche Weiterverarbeitungsstationen an.

Es ist ein Unterdruckerzeuger 21 vorgesehen, dessen Saugseite über eine Leitung 22 mit dem Vakuumraum 7 in Verbindung steht. Von der Leitung 22 zweigt eine Leitung 23 ab, die zu dem Ausdampfraum 6 führt. In der Leitung 23 ist ein Einstellventil 24 vorgesehen, welches dazu dient, das Verhältnis der abgesaugten Brüden aus dem Vakuumraum 7 und dem Ausdampfraum 6 zueinander einzustellen. Die Leitung 23 kann auch an eine Leitung 31 angeschlossen sein, die aus dem Ausdampfraum 6 in die Atmosphäre führt und in welcher eine Absperrklappe 25 angeordnet ist In der Leitung 22 bzw. einer Abzweigleitung 26 ist ein Manometer 27 vorgesehen. Die Abzweigleitung 26 endet an einem Einstellventil 28 zur Einstellung des Unterdrucks. In der Leitung 23 ist ein Manometer 29 vorgesehen. Am Ende der Verbindungsleitung 5 im Ausdampfraum 6 ist ein Thermometer 30 angeordnet, um an dieser Stelle die Temperatur zu überwachen.

Die Anlage wird wie folgt betrieben:

Die wässrige Lösung der Einsatzstoffe, insbesondere Zuckerersatzstoffe, mit einem Wassergehalt von etwa 20 %, wird über die Dosierpumpe 2 und die Rohrleitung 1 in den Schlangenkocher überführt und dort gekocht, so daß die Masse am Übertritt in den Ausdampfraum 6 eine Temperatur von ca. 140° und eine Trockensubstanz von etwa 97 % aufweist. Diese Masse dampft im Ausdampfraum 6 aus, wobei Brüden entweicht. Der Brüden wird bei geschlossener Absperrklappe 25 aus der Leitung 31 in die Leitung 23 über das Einstellventil 24 und die Leitung 22 von dem Unterdruckerzeuger 21 abgesaugt Demzufolge ist die Durchströmmenge an der Durchlaßöffnung 11 bereits entsprechend verringert und die Masse tritt hierbei vergleichsweise offener Einstellung des Einstellventils 13 in den Vakuumraum 7 über, in welchem eine Nachausdampfung stattfindet, Der im Vakuumraum 7 herrschende Unterdruck gestattet diese Nachausdampfung. Der Druck im Vakuumraum 7 kann etwa bis 50 Hektopascal (0,05 Atmosphären absolut) abgesenkt werden. Es versteht sich, daß zur Förderung durch die Durchlaßöffnung 11 eine Druckdifferenz erforderlich ist. Dies bedeutet, daß der Druck in dem Ausdampfraum 6 um diese Druckdifferenz höher ist. Der Druck kann hier etwa 300 Hektopascal (0,3 bar absolut) betragen. Der Unterdruck wirkt sich also nicht nur in dem Vakuumraum 7, sondern auch in dem Ausdampfraum 6 aus. Er setzt sich sogar in einen Schlange 3 des Schlangenkochers 4 fort, wobei er sich mit der Länge dieser Rohrleitung abbaut Dies bedeutet, daß bereits im Schlangenkocher 4 unter Einwirkung von Unterdruck gekocht wird, was vorteilhaft angestrebt wird, um auch bei Verwendung von Zuckeraustauschstoffen als Einsatzstoffen vorteilhaft niedrige Temperaturen während des Kochens zu erzielen. Dabei entstehen vorteilhaft hohe Viskositätswerte. Das Einstellventil 24 ist dabei so eingestellt, daß in Verbindung damit die gewünschte bzw. erforderliche Druckdifferenz zwischen Ausdampfraum 6 und Vakuumraum 7 entsteht. Das Einstellventil 28 dient dagegen in erster Linie der Einstellung der absoluten Größe des Unterdrucks im Vakuumraum 7. Durch die niedrige Temperatur der Masse und die hohe Viskosität ergibt sich der besondere Vorteil, daß übliche Aromen aus den Behältern 16 im Mischer 15 beigemischt werden können. Die Zähigkeit der Masse in der Austragsvorrichtung 8 ist so groß, daß auch der bewußt niedrige Absolutdruck im Vakuumraum 7 zur Anwendung gelangen kann.

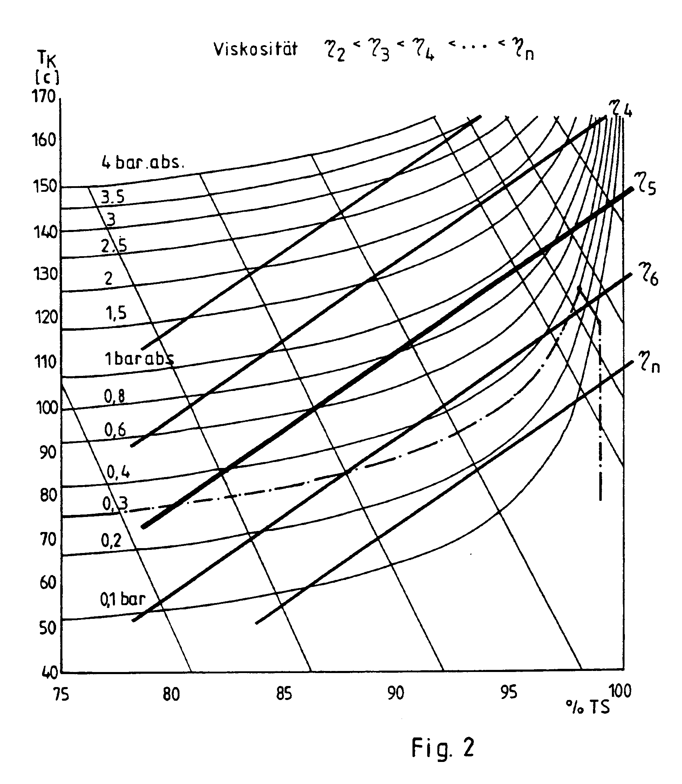

In Figur 2 ist ein Siedeliniendiagramm über der Trockensubstanz in Prozent angegeben, welches die Tendenz der Behandlung der Lösung bzw. der Masse verdeutlicht. Die Siedelinien verlaufen von links nach rechts nicht-linear progressiv gekrümmt aufwärts, wobei nach oben steigende Absolutdrücke angegeben sind. Man erkennt hieraus, daß mit niedrigem Absolutdruck vorteilhaft unter Anwendung niedrigerer Siedetemperaturen gekocht werden kann. Es ist weiterhin eine Schar von Linien gleicher Zähigkeit η eingezeichnet, die etwa gerade ansteigend von links nach rechts verlaufen können. Die Linie mit der höchsten Viskosität ist die unterste Linie. Schräg von links oben nach rechts unten verläuft eine Schar von Verdampfungslinien bei der Nachvakuumierung im Vakuumraum 7. Wenn es beispielsweise erforderlich ist, bei der Verarbeitung eines speziellen Zuckeraustauschstoffs eine Zähigkeit von η ₅ nicht zu unterschreiten, weil sonst das Anlegen und die Aufrechterhaltung des entsprechenden Unterdrucks in dem Vakuumraum 7 nicht möglich ist, wird beispielsweise auf der strichpunktiert herausgezeichneten Siedelinie mit 0,3 bar absolut gekocht, wobei sich der Gehalt an Trockensubstanz im Verlauf des Kochvorgangs erhöht. Bei Übertritt der Masse in den Ausdampfraum 6 wird die 0,3 bar-Siedelinie verlassen. Durch die sich anschließende Vakuumierung im Vakuumraum 7 verläuft die weitere Behandlungskurve parallel zu den Verdampfungslinien der Nachvakuumierung schräg abwärts gerichtet bis zu einem Punkt, an welchem die gewünschte Trockensubstanz erreicht wird. Dies kann beispielsweise 99 % betragen. In diesem Zustand wird die Masse von der Austragsvorrichtung 8 in den Mischer 15 überführt, wobei sie beispielsweise eine Temperatur von 118°C aufweisen kann.

### Bezugszeichenliste:

- 1 =: Rohrleitung
- 2 =: Dosierpumpe
- 3 =: Schlange
- 4 =: Schlangenkocher
- 5 =: Verbindungsleitung
- 6 =: Ausdampfraum
- 7 =: Vakuumraum
- 8 =: Austragseinrichtung
- 9 =: Förderschnecke
- 10 =: Trennwand
- 11 =: Durchlaßöffnung
- 12 =: Ventilkörper
- 13 =: Einstellventil
- 14 =: Leitung
- 15 =: Mischer
- 16 =: Behälter
- 17 =: Leitung
- 18 =: Leitung
- 19 =: Pfeil
- 20 =: Förderband
- 21 =: Unterdruckerzeuger
- 22 =: Leitung
- 23 =: Leitung
- 24 =: Einstellventil
- 25 =: Absperrklappe
- 26 =: Leitung
- 27 =: Manometer
- 28 =: Einstellventil
- 29 =: Manometer
- 30 =: Thermometer
- 31 =: Leitung

## Patentansprüche

1. Verfahren zur kontinuierlichen Herstellung von Hartbonbonmassen aus einer wäßrigen Lösung von Zuckeraustauschstofen als Einsatzstoffe, in dem die Lösung gekocht ausgedampft, unter Unterdruck gesetzt und dabei weiter ausgedampft und gekühlt, mit Aromen, Farben u. dgl. versetzt und schließlich unter weiterer Kühlung zu Bonbons geformt wird, **dadurch gekennzeichnet,** daß die so gebildete Lösung bereits unter Einwirkung von Unterdruck gekocht und unter Einwirkung eines Unterdrucks von nicht höher als 0,3 bar absolut ausgedampft wird, so daß die Lösung mit für normale Aromatisierung ausreichend niedriger Temperatur, für normale Kühlung und Temperierung ausreichend hoher Viskosität und mit ausreichend niedrigem Restwassergehalt anfällt.

2. Verfahren nach Anspruch 1, dadurch gekennzeichnet, daß zur Erreichung einer Trockensubstanz von mindestens 98.5% die wäßrige Lösung bei einer Temperatur von unter 140°C und unter Einwirkung eines Unterdruck von bis zu 0.05 bar absolut weiter ausgedampft wird.

## Claims

1. Process for the continuous manufacture of hard sweet masses from an aqueous solution of sugar substitute substances, in which the solution is boiled, dried by evaporation, placed under the effect of underpressure and thus further dried by evaporation and cooled, mixed with flavourings, colourings and the like and finally shaped into sweets with further cooling, **characterised thereby**, that the thus formed solution is boiled already under the effect of underpressure and is evaporation-dried under the effect of underpressure not higher than 300 hectopascals (0.3 bar), so that the solution comes about with sufficiently low temperature for normal aromatising, sufficiently high viscosity for normal cooling and hardening and with sufficiently low residual water content.

2. Process according to claim 1, **characterised thereby**, that the aqueous solution is further evaporation-dried at a temperature of below 140 °C and under the effect of an underpressure of up to 50 hectopascals (0.05 bar absolute), wherein a dry substance of at least 98.5% is achieved.

## Revendications

1. Procédé de fabrication en continu de pâte à bonbons durs à partir d'une solution aqueuse de produits de substitution du sucre en tant que produit de charge, dans lequel la solution est bouillie, évaporée, mise sous dépression et encore évaporée et refroidie, additionnée d'arômes, de colorants et similaires et enfin formée en bonbons, sous refroidissement complémentaire, caractérisé en ce que la solution ainsi formée, déjà sous l'action d'une dépression, est cuite et sous l'action d'une dépression non supérieure à 0,3 bar absolu est évaporée, de sorte que la solution se trouve à une température suffisamment basse pour l'aromatisation normale, présente une viscosité suffisamment élevée pour le refroidissement et le maintien en température et a une teneur en eau résiduelle suffisamment basse.

2. Procédé selon la revendication 1, caractérisé en ce que pour obtenir une substance sèche d'au moins 98,5 %, la solution aqueuse est encore évaporée à une température inférieure à 140 °C et sous l'action d'une dépression pouvant aller jusqu'à 0,05 bar absolu.
